# FASCICULE DE BREVET EUROPEEN

(11) **EP 3 312 070 B1**
(45) Date de publication et mention de la délivrance du brevet: **09.12.2020**
(21) Numéro de dépôt: 17197137.7
(22) Date de dépôt: 18.10.2017
(51) Int. Cl.: B61D 17/02

(54) **VOITURE PILOTE DE VÉHICULE FERROVIAIRE, NOTAMMENT DE VÉHICULE FERROVIAIRE À GRANDE VITESSE, DONT LA TRAINÉE AÉRODYNAMIQUE EST RÉDUITE**
STEUERWAGEN EINES SCHIENENFAHRZEUGS, INSBESONDERE EINES HOCHGESCHWINDIGKEITSSCHIENENFAHRZEUGS, DESSEN AERODYNAMISCHER WIDERSTAND VERRINGERT IST
CONTROL TRAILER OF A RAILWAY VEHICLE, ESPECIALLY OF A HIGH-SPEED RAILWAY VEHICLE, HAVING REDUCED AERODYNAMIC DRAG

(30) Priorité: 18.10.2016 FR 1660069
(43) Date de publication de la demande: 25.04.2018
(73) Titulaire: ALSTOM Transport Technologies, 93400 Saint-Ouen (FR)
(72) Inventeur: DEBOST, Pierre, 90160 Perouse (FR); GRAPPEIN, Etienne, 68700 Uffholtz (FR)
(74) Mandataire: Lavoix

(56) Documents cités:
- EP-A1- 2 851 257
- WO-A1-2011/120834
- WO-A1-2014/202147
- JP-A- H1 120 685
- JP-A- 2006 143 103

## Description

La présente invention concerne une voiture pilote de véhicule ferroviaire, notamment de véhicule ferroviaire à grande vitesse.

L'aérodynamisme d'un véhicule ferroviaire, et notamment de sa voiture pilote (également appelée voiture de tête), est un critère important dans la conception de ce véhicule ferroviaire. En effet, diminuer la trainée aérodynamique permet de réduire la consommation d'énergie, et autorise également une réduction de la puissance de la chaine de traction. Les efforts aérodynamiques augmentent avec la vitesse du véhicule ferroviaire, si bien que l'optimisation de la trainée est primordiale dans le cas d'un véhicule ferroviaire à grande vitesse.

On connait déjà, dans l'état de la technique, notamment d'après EP 2 851 257 A1, JP H11 20685 A et WO 2014/202147, une voiture pilote similaire à celle définie dans le préambule de la revendication 1.

L'invention a notamment pour but d'améliorer la résistance à l'avancement d'un tel véhicule ferroviaire en diminuant sa trainée aérodynamique ramenée au nombre de personnes transportées.

A cet effet, l'invention a notamment pour objet une voiture pilote de véhicule ferroviaire, selon la revendication 1.

La partie inférieure du carénage avant, disposée en avant du logement à bogie et présentant une largeur supérieure à celle du bogie, permet de limiter l'air s'engouffrant dans le logement du bogie, et réduit donc les efforts de trainée du bogie et de la cavité.

Une voiture pilote de véhicule ferroviaire selon l'invention peut comporter en outre l'une ou plusieurs des caractéristiques suivantes, prises seules ou selon toutes combinaisons techniquement envisageables.
- La voiture pilote comporte, de part et d'autre de chaque logement dans la direction transversale, des jupes latérales recouvrant latéralement en partie le bogie logé dans ce logement.
- La voiture pilote comporte un pare-brise avant incliné à 28° par rapport à un plan horizontal comportant les directions longitudinale et transversale.
- La voiture pilote comporte une toiture munie d'au moins un pantographe, la toiture étant dépourvue d'autre équipement haute tension.
- La voiture pilote comporte un pare-brise avant, la voiture pilote étant dépourvue de déflecteur en dessous du pare-brise avant.
- La voiture pilote comporte une structure de caisse et au moins un capot de toiture, et comportant au moins un équipement extérieur, chaque équipement extérieur étant agencé affleurant avec le carénage avant, l'au moins un capot de toiture et/ou la structure de caisse.

L'invention concerne également un véhicule ferroviaire, notamment à grande vitesse, caractérisé en ce qu'il comporte une voiture pilote telle que définie précédemment, et au moins une voiture remorque, dont l'une est adjacente à ladite voiture pilote.

Avantageusement, au moins l'un parmi la voiture pilote et la voiture remorque adjacente comporte, à la jonction entre cette voiture pilote et cette voiture remorque adjacente, une bavette périphérique prolongeant le contour de cette voiture pilote ou voiture remorque vers l'autre parmi la voiture pilote et la voiture remorque adjacente.

De manière optionnelle, la voiture pilote comporte une extrémité arrière raccordée à une extrémité de liaison de la voiture remorque adjacente, ladite extrémité arrière de la voiture pilote présentant une première section transversale, et ladite extrémité de liaison de la voiture remorque adjacente présentant une seconde section transversale, les première et seconde sections transversales étant identiques.

Ces caractéristiques permettent toutes d'améliorer encore la trainée de la voiture pilote et de la première remorque.

L'invention sera mieux comprise à la lecture de la description qui va suivre, donnée uniquement à titre d'exemple et faite en se référant aux figures annexées, parmi lesquelles :
- la figure 1 est une vue en perspective d'une voiture pilote de véhicule ferroviaire, selon un exemple de mode de réalisation de l'invention ;
- la figure 2 est une vue en perspective, du dessus, de la voiture pilote de la figure 1 ; et
- la figure 3 est une vue de profil de la jonction entre la voiture pilote de la figure 1 et une voiture remorque adjacente du véhicule ferroviaire.

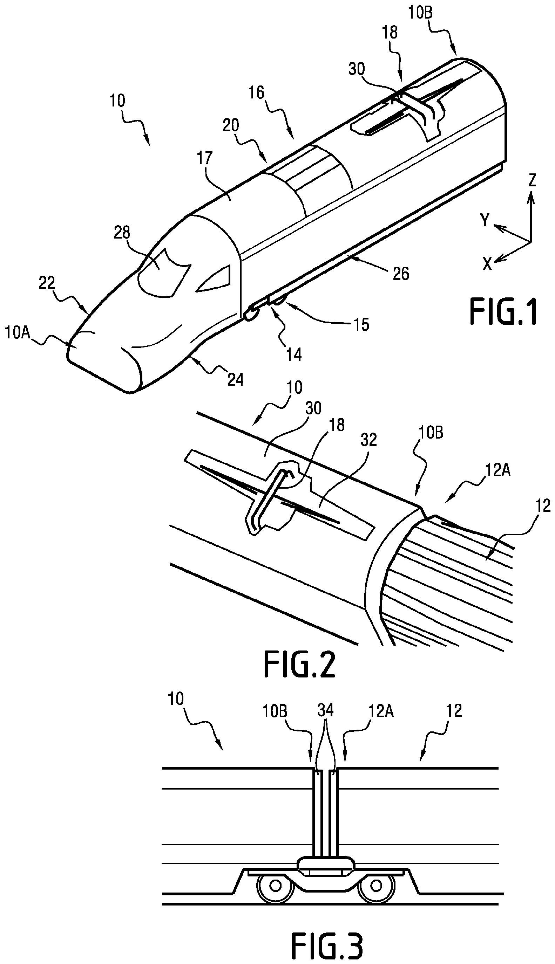

On a représenté, sur la figure 1, une voiture pilote 10 de véhicule ferroviaire, selon un exemple de mode de réalisation de l'invention. De préférence, le véhicule ferroviaire est un train à grande vitesse.

Le véhicule ferroviaire comporte habituellement deux voitures pilotes 10, l'une à une extrémité avant et l'autre à une extrémité arrière du véhicule. Ces deux voitures pilotes 10 sont identiques, si bien qu'une seule d'entre elles sera décrite en détail.

Le véhicule ferroviaire comporte par ailleurs des voitures remorques 12, alignées entre les deux voitures pilotes 10.

La voiture pilote 10 s'étend dans une direction longitudinale X, entre une extrémité avant 10A et une extrémité arrière 10B. L'extrémité arrière 10B est destinée à être raccordée à une extrémité de liaison 12A d'une voiture remorque adjacente 12, comme cela est représenté sur les figures 2 et 3.

La voiture pilote 10 comprend de manière classique au moins un logement 14 pour un bogie 15.

La voiture pilote 10 comporte par ailleurs une toiture 16 dans laquelle est agencé au moins un pantographe 18, généralement à proximité de l'extrémité arrière 10B. La toiture comprend également un capot de toiture 17.

Conformément au mode de réalisation décrit, la toiture 16 ne comporte, comme équipement haute tension, que le pantographe 18, si bien qu'elle est dépourvue d'autre équipement haute tension.

En revanche, la toiture 16 comporte généralement d'autres équipements divers 20, notamment des systèmes de climatisation, et des résistances de freinage.

La présente invention a pour but de réduire la trainée aérodynamique du véhicule ferroviaire.

A cet effet, la voiture pilote 10 comporte un carénage avant 22 comprenant une partie inférieure 24 disposée en avant du logement 14 dans la direction longitudinale X. En d'autres termes, toute droite parallèle à la direction longitudinale X, passant par le logement 14, passe également par la partie inférieure 24.

Cette partie inférieure 24 présente une largeur, dans une direction transversale Y perpendiculaire à la direction longitudinale X, supérieure à une largeur du bogie 15 dans cette même direction transversale Y. Ainsi, l'air est dévié sur les côtés par cette partie inférieure 24, ce qui permet de limiter l'air s'engouffrant dans le logement 14 lorsque le véhicule ferroviaire se déplace vers l'avant.

Par ailleurs, la voiture pilote 10 comporte, de part et d'autre de chaque logement 14 dans la direction transversale Y, des jupes latérales 26 recouvrant latéralement en partie le bogie 16 logé dans ce logement 14. De préférence, le bogie 16 comportant des roues montées sur des essieux, chaque jupe latérale 26 présente un bord inférieur agencé au-dessus des essieux dans une direction verticale Z.

Ces jupes latérales 26 réduisent encore l'air s'engouffrant dans le logement 14 lorsque le véhicule ferroviaire se déplace. Elles améliorent donc l'efficacité du carénage avant 22 pour l'aérodynamisme de la voiture pilote 10.

Par ailleurs, la voiture pilote 10 comporte un pare-brise avant 28 incliné à 28° par rapport à un plan horizontal comportant les directions longitudinale X et transversale Y. Cette inclinaison est un compromis optimal entre un bon aérodynamisme et une bonne vision pour le conducteur à travers le pare-brise avant 28.

Il est à noter que, de préférence, la voiture pilote 10 est dépourvue de déflecteur en dessous du pare-brise avant 28. Un tel déflecteur est dans l'état de la technique destiné à limiter l'arrivée d'eau sur le pare-brise avant 28 en cas de pluie.

Avantageusement, la voiture pilote 10 comprend un carénage de pantographe 30, visible sur les figures 1 et 2, entourant les pantographes 18, et comprenant une ouverture supérieure 32 de passage des pantographes 18. Cette ouverture supérieure 32 présente un contour correspondant sensiblement à la forme des pantographes 18, de sorte que la surface de cette ouverture supérieure 32 est minimale.

Ce carénage de pantographe 30 forme un logement pour les pantographes 18, dans lequel ces pantographes 18 sont intégralement logés lorsqu'ils sont repliés. En revanche, lorsque le pantographe 18 est déployé, seul ce pantographe 18 s'étend en dehors de ce carénage de pantographe 30. Le carénage de pantographe 30 permet donc de limiter la résistance de l'air contre tous les éléments classiquement liés au pantographe 18 et au raccordement avec la remorque 12.

Il est par ailleurs à noter que, de préférence, tous les équipements extérieurs 20 rapportés en toiture 16 sont agencés affleurant avec le carénage avant 22, le capot de toiture 17 et/ou la structure de caisse de la voiture 10.

La trainée du véhicule ferroviaire est également améliorée par des arrangements particuliers à la jonction entre la voiture pilote 10 et la voiture remorque adjacente 12.

En particulier, au moins l'une parmi la voiture pilote 10 et la voiture remorque adjacente 12 comporte, à la jonction entre cette voiture pilote10 et cette voiture remorque adjacente 12, une bavette périphérique 34 prolongeant le contour de cette voiture pilote 10 ou voiture remorque 12 vers l'autre parmi la voiture pilote 10 et la voiture remorque adjacente 12.

De préférence, chacune de ces voiture pilote 10 et remorque adjacente 12 est munie d'une telle bavette périphérique 34. Les bavettes périphériques 34 s'étendent donc l'une vers l'autre, l'une en regard de l'autre.

Par exemple, chaque bavette périphérique 34 est réalisée en caoutchouc.

Chaque bavette périphérique 34 permet de limiter la quantité d'air s'engouffrant entre la voiture pilote 10 et la voiture remorque adjacente 12 lorsque le véhicule ferroviaire se déplace. Les bavettes périphériques 34 contribuent donc à diminuer la résistance à l'avancement du véhicule ferroviaire.

Par ailleurs, l'extrémité arrière 10B de la voiture pilote 10 présentant une première section transversale, et l'extrémité de liaison 12A de la voiture remorque adjacente 12 présentant une seconde section transversale, les première et seconde sections transversales sont identiques. Il y a ainsi une continuité de forme à la jonction entre la voiture pilote 10 et la voiture remorque adjacente 12, limitant les perturbations d'air, et diminuant donc la résistance à l'avancement du véhicule ferroviaire.

Il apparaît qu'en combinant les caractéristiques avantageuses décrites précédemment, un véhicule ferroviaire, selon l'invention, d'une longueur de 202m et de gabarit (EN 15273 catégories GB, G2, 3.3) atteint un niveau de trainée aérodynamique spécifique de 6,08.10⁻⁴ N/[(km/h)².pers]. Cette valeur est à comparer aux performances des trains circulant actuellement :
- RGV2N2-3UFC : 8,66.10⁻⁴ N/[(km/h)².pers.]
- Zefiro 360 : 7,67.10⁻⁴ N/[(km/h)².pers.]
- ICE Velaro : 10,4.10⁻⁴ N/[(km/h)².pers.]

L'amélioration notable de la trainée aérodynamique spécifique permet de réduire la consommation d'énergie due à la résistance de l'air de 20.7% par rapport au Zefiro.

## Revendications

1. Voiture pilote (10) de véhicule ferroviaire, notamment de véhicule ferroviaire à grande vitesse, s'étendant le long d'une direction longitudinale (X), et comprenant au moins un logement (14) pour un bogie (15), la voiture pilote (10) comportant un carénage avant (22) comprenant une partie inférieure (24) disposée en avant du logement (14) dans la direction longitudinale (X), ladite partie inférieure (24) présentant une largeur, dans une direction transversale (Y) perpendiculaire à la direction longitudinale (X), supérieure à une largeur du bogie (15) dans cette même direction transversale (Y), **caractérisée en ce qu'**elle comporte une toiture (16) munie d'au moins un pantographe (18), et comprenant un carénage de pantographe (30), entourant le pantographe (18) et comprenant une ouverture supérieure (32) de passage du pantographe (18), dont le contour correspond à la forme du pantographe (18).

2. Voiture pilote (10) selon la revendication 1, comportant, de part et d'autre de chaque logement (14) dans la direction transversale (Y), des jupes latérales (26) recouvrant latéralement en partie le bogie (15) logé dans ce logement (14).

3. Voiture pilote (10) selon la revendication 1 ou 2, comportant un pare-brise avant (28) incliné à 28° par rapport à un plan horizontal comportant les directions longitudinale (X) et transversale (Y).

4. Voiture pilote (10) selon l'une quelconque des revendications précédentes, comportant une toiture (16) munie d'au moins un pantographe (18), la toiture (16) étant dépourvue d'autre équipement haute tension.

5. Voiture pilote (10) selon l'une quelconque des revendications précédentes, comportant un pare-brise avant (28), la voiture pilote (10) étant dépourvue de déflecteur en dessous du pare-brise avant (28).

6. Voiture pilote (10) selon l'une quelconque des revendications précédentes, comprenant une structure de caisse et au moins un capot de toiture (17), et comportant au moins un équipement extérieur (20), chaque équipement extérieur étant agencé affleurant avec le carénage avant (22), l'au moins un capot de toiture (17) et/ou la structure de caisse.

7. Véhicule ferroviaire, notamment véhicule ferroviaire à grande vitesse, **caractérisé en ce qu'**il comporte une voiture pilote (10) selon l'une quelconque des revendications 1 à 6, et au moins une voiture remorque (12), dont l'une est adjacente à ladite voiture pilote (10).

8. Véhicule ferroviaire selon la revendication 7, dans lequel au moins l'un parmi la voiture pilote (10) et la voiture remorque adjacente (12) comporte, à la jonction entre cette voiture pilote (10) et cette voiture remorque adjacente (12), une bavette périphérique (34) prolongeant le contour de cette voiture pilote (10) ou voiture remorque (12) vers l'autre parmi la voiture pilote (10) et la voiture remorque adjacente (12).

9. Véhicule ferroviaire selon la revendication 7 ou 8, dans lequel la voiture pilote (10) comporte une extrémité arrière (10B) raccordée à une extrémité de liaison (12A) de la voiture remorque adjacente (12), ladite extrémité arrière (10B) de la voiture pilote (10) présentant une première section transversale, et ladite extrémité de liaison (12A) de la voiture remorque adjacente (12) présentant une seconde section transversale, les première et seconde sections transversales étant identiques.

## Patentansprüche

1. Triebwagen (10) eines Schienenfahrzeugs, insbesondere eines Hochgeschwindigkeit-Schienenfahrzeugs, der sich entlang einer Längsrichtung (X) erstreckt und aufweist wenigstens eine Unterbringung (14) für ein Drehgestell (15), wobei der Triebwagen (10) eine vordere Verkleidung (22) aufweist, die einen unteren Abschnitt (24) aufweist, der in der Längsrichtung (X) vor der Unterbringung (14) angeordnet ist, wobei der untere Abschnitt (24) eine Breite hat in einer Querrichtung (Y) senkrecht zu der Längsrichtung (X), die größer als eine Breite des Drehgestells (15) in dieser gleichen Querrichtung (Y) ist, **dadurch gekennzeichnet, dass** er aufweist ein Dach (16), das mit mindestens einem Stromabnehmer (18) ausgestattet ist und eine Stromabnehmer-Verkleidung (30) aufweist, die den Stromabnehmer (18) umgibt und eine obere Öffnung (32) für den Durchtritt des Stromabnehmers (18) aufweist, deren Kontur der Form des Stromabnehmers (18) entspricht.

2. Triebwagen (10) gemäß Anspruch 1, aufweisend in der Querrichtung (Y) beiderseits jeder Unterbringung (14) seitliche Schürzen (26), die das in dieser Unterbringung (14) untergebrachte Drehgestell (15) seitlich teilweise abdecken.

3. Triebwagen (10) gemäß Anspruch 1 oder 2, aufweisend eine vordere Windschutzscheibe (28), die um 28° geneigt ist bezüglich einer horizontalen Ebene, die die Längs- (X) und Quer- (Y) Richtung aufweist.

4. Triebwagen (10) gemäß irgendeinem der vorhergehenden Ansprüche, aufweisend ein Dach (16), das mit wenigstens einem Stromabnehmer (18) ausgestattet ist, wobei das Dach (16) frei von anderer Hochspannungsausstattung ist.

5. Triebwagen (10) gemäß irgendeinem der vorhergehenden Ansprüche, aufweisend eine vordere Windschutzscheibe (28), wobei der Triebwagen (10) unter der vorderen Windschutzscheibe (28) Deflektor-frei ist.

6. Triebwagen (10) gemäß irgendeinem der vorhergehenden Ansprüche, aufweisend eine Gehäusestruktur und wenigstens eine Dachhaube (17), und aufweisend wenigstens eine Außenausstattung (20), wobei jede Außenausstattung mit der vorderen Verkleidung (22), der wenigstens einen Dachhaube (17) und/oder der Gehäusestruktur bündig angeordnet ist.

7. Schienenfahrzeug, insbesondere Hochgeschwindigkeit-Schienenfahrzeug, **dadurch gekennzeichnet, dass** es aufweist einen Triebwagen (10) gemäß irgendeinem der Ansprüche 1 bis 6 und wenigstens einen Anhängewagen (12), von denen einer benachbart zu dem Triebwagen (10) ist.

8. Schienenfahrzeug gemäß Anspruch 7, wobei wenigstens einer von dem Schienenwagen (10) und dem benachbarten Anhängewagen (12) an der Verbindungsstelle zwischen diesem Triebwagen (10) und diesem benachbarten Anhängewagen (12) aufweist eine Umfangsverkleidung (34), welche die Kontur dieses Triebwagens (10) oder Anhängewagens (12) zu dem anderen von dem Triebwagen (10) und dem benachbarten Anhängewagen (12) hin verlängert.

9. Schienenfahrzeug gemäß Anspruch 7 oder 8, wobei das Triebfahrzeug (10) ein hinteres Ende (10B) aufweist, das mit einem Verbindungsende (12A) des benachbarten Anhängewagens (12) verbunden ist, wobei das hintere Ende (10B) des Triebwagens (10) einen ersten Querschnitt hat, und wobei das Verbindungsende (12A) des benachbarten Anhängewagens (12) einen zweiten Querschnitt hat, wobei der erste und der zweite Querschnitt identisch sind.

## Claims

1. Front coach (10) of a railway vehicle, especially of a high-speed railway vehicle, extending in a longitudinal direction (X) and comprising at least one housing (14) for a bogie (15), the front coach (10) having a front fairing (22) comprising a lower portion (24) arranged in front of the housing (14) in the longitudinal direction (X), said lower portion (24) having a width, in a transverse direction (Y) perpendicular to the longitudinal direction (X), which is greater than a width of the bogie (15) in the same transverse direction (Y), **characterised in that** it comprises a roof (16) equipped with at least one pantograph (18) and comprising a pantograph fairing (30) which surrounds the pantograph (18) and comprises an upper opening (32) for passage of the pantograph (18), the contour of which opening corresponds to the shape of the pantograph (18).

2. Front coach (10) according to claim 1, comprising, on either side of each housing (14) in the transverse direction (Y), lateral skirts (26) which partially cover the bogie (15) housed in the housing (14) at the sides.

3. Front coach (10) according to claim 1 or 2, comprising a front windscreen (28) which is inclined at 28° relative to a horizontal plane comprising the longitudinal (X) and transverse (Y) directions.

4. Front coach (10) according to any one of the preceding claims, comprising a roof (16) equipped with at least one pantograph (18), the roof (16) having no other high-voltage equipment.

5. Front coach (10) according to any one of the preceding claims, comprising a front windscreen (28), the front coach (10) not having a deflector beneath the front windscreen (28).

6. Front coach (10) according to any one of the preceding claims, comprising a body structure and at least one roof covering (17), and comprising at least one external piece of equipment (20), each piece of external equipment being arranged flush with the front fairing (22), the at least one roof covering (17) and/or the body structure.

7. Railway vehicle, especially high-speed railway vehicle, **characterised in that** it comprises a front coach (10) according to any one of claims 1 to 6 and at least one trailer coach (12), one of which is adjacent to said front coach (10).

8. Railway vehicle according to claim 7, wherein at least one of the front coach (10) and the adjacent trailer coach (12) comprises, at the junction between the front coach (10) and the adjacent trailer coach (12), a peripheral guard flap (34) which extends the contour of the front coach (10) or trailer coach (12) towards the other of the front coach (10) and the adjacent trailer coach (12).

9. Railway vehicle according to claim 7 or 8, wherein the front coach (10) comprises a rear end (10B) which is connected to a connecting end (12A) of the adjacent trailer coach (12), said rear end (10B) of the front coach (10) having a first cross-section and said connecting end (12A) of the adjacent trailer coach (12) having a second cross-section, the first and second cross-sections being identical.
